# EUROPEAN PATENT SPECIFICATION

(11) **EP 0 604 916 B1**
(45) Date of publication and mention of the grant of the patent: **20.11.1996**
(21) Application number: 93120822.7
(22) Date of filing: 23.12.1993
(51) Int. Cl.: B62D 37/02

(54) **Aerodynamic arrangement for vehicle**
Aerodynamische Anordnung für ein Fahrzeug
Arrangement aérodynamique pour un véhicule

(30) Priority: 28.12.1992 JP 361171/92
(43) Date of publication of application: 06.07.1994
(73) Proprietor: MITSUBISHI JIDOSHA KOGYO KABUSHIKI KAISHA, Tokyo 108 (JP)
(72) Inventor: Fukuda, Hitoshi, c/o Mitsubishi Jidosha Kogyo K.K., Tokyo (JP); China, Hiroshi, c/o Mitsubishi Jidosha Kogyo K.K., Tokyo (JP); Yanagimoto, Kazuo, c/o Mitsubishi Jidosha Kogyo KK, Tokyo (JP); Nakagawa, Kunio, c/o Mitsubishi Jidosha Kogyo K.K., Tokyo (JP)
(74) Representative: Kern, Ralf M., Dipl.-Ing. Ralf M. Kern & Partner

(56) References cited:
- DE-U- 8 500 739
- US-A- 4 925 236
- POPULAR SCIENCE, vol.232, no.2, February 1988, NEW YORK US pages 16 - 22 DAN MCCOSH 'Automotive Newsfront'

## Description

### BACKGROUND OF THE INVENTION

### Field of the Invention

The present invention relates to an aerodynamic arrangement for a vehicle, and more particularly to an aerodynamic arrangement for reducing a lift which is caused by airstreams produced by a running vehicle and adversely affects the operational stability thereof.

### Description of the Related Art

Japanese Utility Model Laid-Open Publication No. Sho 64-62980 exemplifies a rear spoiler for a motor vehicle. Figs. 1 and 2 of this publication show the rear spoiler which extends across a trunk lid at the rear edge thereof, and has a substantially triangular cross section. This rear spoiler becomes higher toward the rear edge of the trunk lid, functions to dam airstreams flowing over the trunk lid, and reduces a negative pressure acting on the trunk lid and a lift produced at the rear part of the vehicle, thereby enabling the vehicle to run reliably.

Such a rear spoiler is effective to reduce the lift at the rear part of the vehicle, but unfortunately increases an air drag on the running vehicle.

The present inventors have conducted a variety of experiments to study states of airstreams flowing over the rear part of the vehicle and to solve the foregoing contradictory problems, and have noted the following matters.

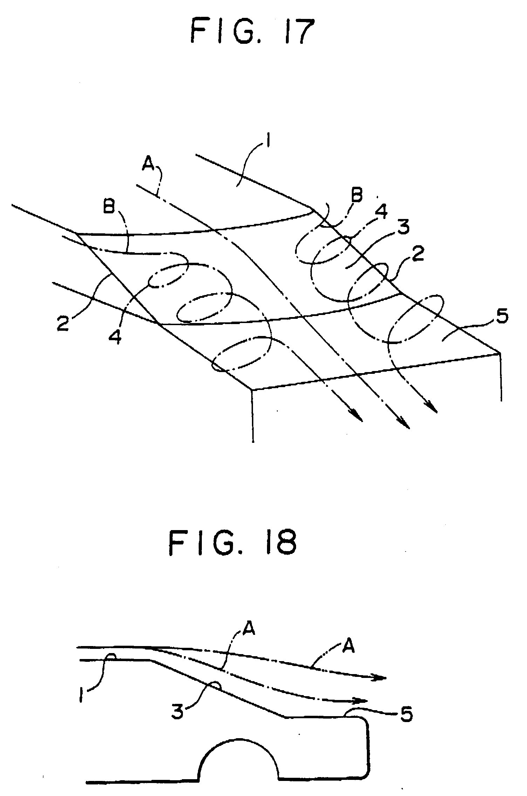

As shown in Figs. 17 and 18 of the accompanying drawings, when the vehicle is running, two kinds of airstreams flow over the rear part thereof. Specifically, an airstream A flows from a roof panel 1 to the trunk lid via a rear window, and a pair of airstreams B from the opposite sides of the vehicle whirl toward the rear window 3 and the trunk lid 5 via rear pillars 2, and finally flow away from the vehicle.

If no airstreams B are present, the airstream A will flow over the rear window 3 and the trunk lid 5 as shown by a dash-and-two-dot line in Fig. 18. Conversely, when the airstreams B intensely whirl over the rear window 3 and the trunk lid 5, they urge the airstream A downward, causing it to flow very close to the trunk lid 5, and to be accelerated toward the rear edge of the trunk lid 5, as shown by dash-and-one-dot line.

Under this condition, a negative pressure acts on the rear window 3 and the trunk lid 5, which produces a lift at the rear wheels of the vehicle. Such a lift adversely affects the operational stability of the vehicle.

The inventors have found that the foregoing problems can be overcome by suppressing flow of the airstreams B toward the central area of the trunk lid.

### Summary of the Invention

It is an object of the present invention to provide an aerodynamic arrangement to solve the foregoing problems. According to the invention, the aerodynamic arrangement is disposed on a trunk lid of a notch-back type vehicle, and comprises biasing means for diverting airstreams whirling along the opposite side edges of the trunk lid. Therefore, the straight airstream advancing over the roof panel and a sloping rear window toward the trunk lid is not urged downward by the whirling airstreams, and flows over the trunk lid, thereby decreasing a lift on the trunk lid. Further, since the whirling airstreams are not dammed by the aerodynamic arrangement, an air drag on a running vehicle is suppressed remarkably.

### Brief Description of the Drawings

In all Figures identical parts have identical reference numbers.

Fig. 1 is a perspective view of an aerodynamic arrangement, disposed on a trunk lid of a vehicle, according to a first embodiment of the present invention.

Fig. 2(a) is graph showing a variation of a coefficient of air drag depending upon the ratio between a height of an aerodynamic arrangement and a height between a roof panel and a rear center of a trunk lid.

Fig. 2(b) is a graph showing a variation of a coefficient of lift depending upon the ratio between the height of the aerodynamic arrangement and the height between the roof panel and the rear center of the trunk lid.

Fig. 3(a) is a graph showing a variation of a coefficient of air drag depending upon the ratio between a width of the aerodynamic arrangement and a width of the trunk lid.

Fig. 3(b) is a graph showing a variation of a coefficient of lift depending upon the ratio between the width of the aerodynamic arrangement and the width of the trunk lid.

Fig. 4 is a perspective view of an aerodynamic arrangement according to a second embodiment of the invention.

Fig. 5 is a side elevation view of the aerodynamic arrangement of Fig. 1.

Fig. 6 is a perspective view of an aerodynamic arrangement according to a third embodiment.

Fig. 7 is a perspective view of an aerodynamic arrangement according to a fourth embodiment.

Fig. 8 is a perspective view of an aerodynamic arrangement according to a fifth embodiment.

Fig. 9 is a cross-sectional view of the aerodynamic arrangement, taken along line IX-IX of Fig. 8.

Fig. 10 is a perspective view of an aerodynamic arrangement according to a sixth embodiment.

Fig. 11 is a perspective view of an aerodynamic arrangement according to a seventh embodiment.

Fig. 12 is an enlarged cross-sectional view of the aerodynamic arrangement, taken along line XII-XII of Fig. 11.

Fig. 13 is a perspective view of an aerodynamic arrangement according to an eighth embodiment.

Fig. 14 is a perspective view of an aerodynamic arrangement according to a ninth embodiment.

Fig. 15(a) is a graph showing a variation of a coefficient of air drag depending upon the ratio between a length of the aerodynamic arrangement of Fig. 14 and a length of a sloping side thereof.

Fig. 15(b) is a graph showing a variation of a coefficient of lift depending upon the ratio between the length of the aerodynamic arrangement and the length of the sloping side of the aerodynamic arrangement.

Fig. 16 is a perspective view of an aerodynamic arrangement according to a tenth embodiment.

Fig. 17 schematically shows airstreams flowing over a rear part of a notch-back type vehicle without an aerodynamic arrangement.

Fig. 18 shows routes of airstreams from a roof panel of the vehicle of Fig. 17.

### Description of the Preferred Embodiments

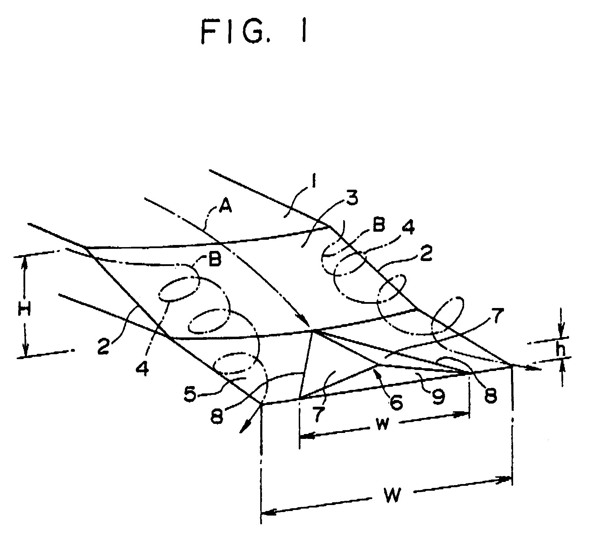

Referring to Fig. 1, an aerodynamic arrangement 6 according to a first embodiment is disposed on a trunk lid 5 at the center thereof of a notch back type vehicle which includes a roof panel 1, a rear window 3 sloping downward toward the trunk lid 5 and having a pair of rear pillars 2 at the opposite sides thereof.

The aerodynamic arrangement 6 is a substantially triangular pyramid, which is disposed on the trunk lid 5 in such a manner that a ridge between a pair of three-angled sloping sides 7 constituting biasing means is in agreement with the center of the trunk lid 5, bases 8 of the sloping sides 7 fan out, and the other three-angled sloping side 9 is substantially upright.

When the vehicle is in operation, an airstream A flows straight to the trunk lid 5 via the roof panel 1 and the rear window 3, and airstreams B along the side edges of the vehicle whirl toward the trunk lid 5 via the rear pillars 2 and the rear window 3. In other words, the airstreams B make intense spiral motion as shown by vortexes 4 in Fig. 1. The whirling airstreams B are, however, diverted and separated from each other by the three-angled sloping aides 7, and are difficult to advance toward the center of the rear window 3. Thus, the airstreams B are weakened the spiral motion thereof, and advance rearward along the opposite side edges of the vehicle.

Due to the weakened spiral motion of the airstreams B, the airstream A is slow to be urged toward the trunk lid 5, and flows off from the rear window 3 and the trunk lid 5. Therefore, a negative pressure caused by the airstreams A and B and acting on the rear window 3 and the trunk lid 5 is reduced extensively.

When the two three-angled sloping sides 7 turn the airstreams B aside, a lift at the rear part of the vehicle is also positively decreased by component of downward force applied by the airstreams B.

As described so far, the aerodynamic arrangement 6 can not only decrease the lift but also extensively reduce the air drag on the vehicle, thereby improving the operational stability of the vehicle compared with the prior art rear spoiler. Specifically, the present invention can accomplish the object to reduce the lift without increasing the air drag.

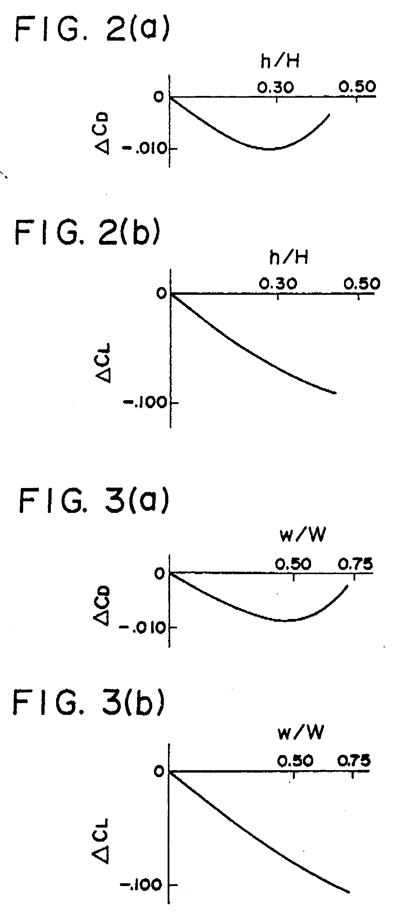

Figs. 2(a), 2(b), 3(a) and 3(b) are graphs respectively showing an example of a variation ΔCD of a coefficient of air drag CD and an example of a variation ΔCL of a coefficient of lift CL applied to rear wheels of the vehicle by varying sizes of the aerodynamic arrangement 6.

In these figures, characters denote the following; H: a height between the rear center edge of the roof panel 1 and the rear center edge of the trunk lid 5; h: a maximum height of the aerodynamic arrangement 6, W: a width of the trunk lid 5; and w: a width of the aerodynamic arrangement 6. Figs. 2(a) and 2(b) respectively show the variation ΔCD of the coefficient of air drag, and variation of ΔCL of the coefficient of lift of the rear wheels when w/W is approximately 0.5 and h/H is variable.

As can be seen from Figs. 2(a) and 2(b), the larger h/H, the more extensively ΔCL is reduced. ΔCL is reduced most extensively when h/H is 0.30. When h/H is between 0.15 and 0.40, ΔCD is decreased by the amount of 0.007 or more. Even if w/W is variable, the coefficient of air drag CD can be sufficiently decreased as described above. Therefore, h/H is preferably between 0.15 and 0.40.

Figs. 3(a) and 3(b) respectively show the variation ΔCD of the coefficient of air drag and ΔCL of the coefficient of the lift of the rear axle when h/H is approximately 0.3 and w/W is variable.

As shown in Figs. 3(a) and 3(b), the larger w/W, the more extensively ΔCL is reduced. ΔCD is reduced most extensively when w/W is 0.50. ΔCD is reduced by the amount of 0.007 or more when w/W is between 0.30 and 0.60. Even when h/H is variable, the coefficient of drag ED can be sufficiently reduced. Therefore, w/W is preferably between 0.30 and 0.60.

It is, therefore, possible to extensively reduce not only the coefficient of air drag CD but also the coefficient of lift CL by selecting an optimum width w and maximum height h of the aerodynamic arrangement 6. Thus, the vehicle can reliably operate with a smaller running resistance and a reduced fuel consumption.

In the foregoing description, W denotes the whole width of the trunk lid. However, if fenders are provided along the opposite side edges of the trunk lid, W also denotes the width of the trunk lid including flat portions of the fenders. In this embodiment, w/W is preferably between 0.30 and 0.60.

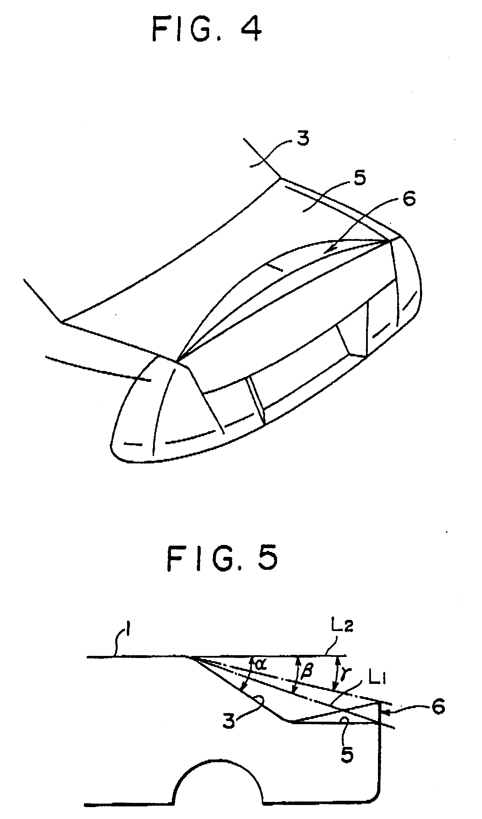

When an aerodynamic arrangement of a second embodiment is in the shape of slender crescent as shown in Fig. 4, the coefficient of lift CL can be sufficiently reduced without an extensive increase of the coefficient of air drag CD even if w/W is large.

An angle α formed by a prolongation L₂ of the roof panel 1 and the rear window 3 is changed variously so as to extensively reduce the coefficient of lift CL without increasing the coefficient of air drag CD, as shown in Fig. 5. When the angle α is equal to or more than 20 degrees, the foregoing effect is remarkable, and is most remarkable when the angle α is approximately 30 degrees.

An angle β formed by the prolongation L₂ of the roof panel 1 and a line L₁ connecting the roof panel 1 and the rear edge of the trunk lid 5 is changed variously so as to reduce the coefficient of lift CL without an increase of the coefficient of air drag CD. Referring to Fig. 5, the foregoing effect is remarkable when the angle β is between 10 degrees and 70 degrees. It ii most remarkable when the angle β is approximately 16 degrees.

Further, an angle γ between the prolongation L₂ of the roof panel 1 and the vertex of the aerodynamic arrangement 6 is variously changed so as to reduce the coefficient of lift CL without an increase of the coefficient of air drag CD. This effect is remarkable when the angle γ is between 10 degrees and 45 degrees, and is most remarkable when the angle γ is approximately 15 degrees.

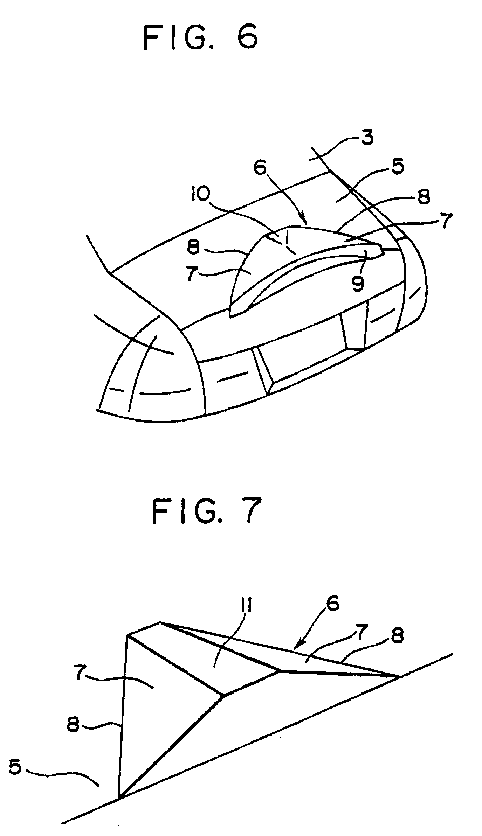

Referring to Fig. 6, an aerodynamic arrangement 6 according to a third embodiment is disposed on the trunk lid 5 at the rear center thereof. The aerodynamic arrangement 6 is substantially crescent-shaped, and comprises a pair of sloping sides 7 as the biasing means, a triangular top portion 10, and an upright side 9 having a concave portion. The aerodynamic arrangement 6 becomes taller toward the center thereof, and wider toward the rear edge of the trunk lid 5. This aerodynamic arrangement 6 is as effective as that of the first embodiment shown in Fig. 1.

An aerodynamic arrangement 6 of a fourth embodiment is shown in Fig. 7. The aerodynamic arrangement 6 is disposed on the trunk lid 5 at the rear center thereof, and has a quadlateral top portion 11 between a pair of three-angled sloping sides 7. The top portion 11 becomes taller and wider toward the rear edge thereof so as to urge the airstream A upward. The aerodynamic arrangement 6 is as effective as that of the first embodiment. Since the airmstream A is also urged upward by the quadlateral top portion 11, the rear part of the vehicle is pulled downward by the reaction. This phenomenon is effective to reduce the lift on the rear wheels.

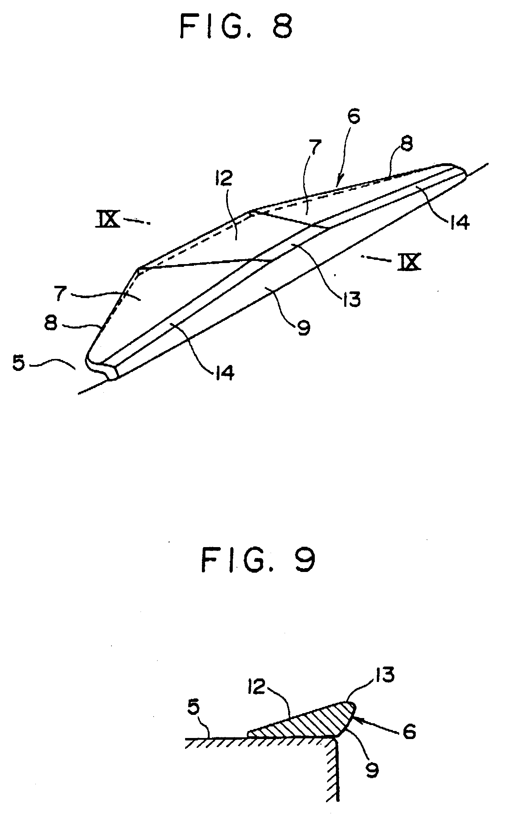

Referring to Figs. 8 and 9, an aerodynamic arrangement of a fifth embodiment is also disposed on the trunk lid 5. The aerodynamic arrangement 6 is in the shape of modified crescent, and has a substantially quadlateral top portion 12 which becomes higher toward the rear edge of the trunk lid 5, a pair of quadlateral sloping sides 7, a sloping side 9, and flat and thin edges 14 and 13 extending along the sloping side 9. The sloping side 9 somewhat projects from rear edge of the trunk lid 5 as shown in Fig. 9. This aerodynamic arrangement 6 is also as effective as those of the foregoing embodiments.

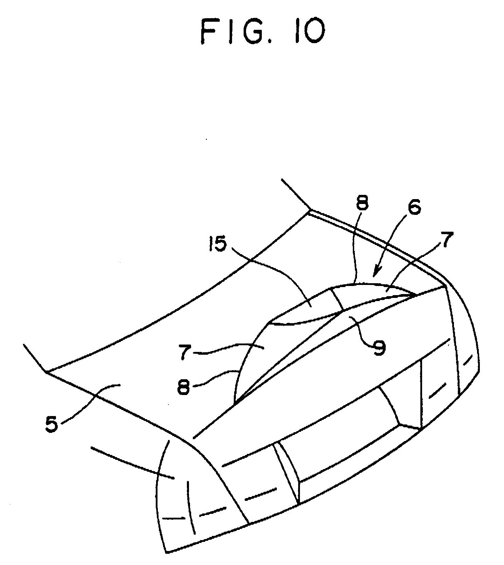

Fig. 10 shows an aerodynamic arrangement 6 according to a sixth embodiment. The aerodynamic arrangement 6 is substantially crescent-shaped similarly to the aerodynamic arrangement 6 of the third embodiment (Fig. 6), and has four substantially three-angled sides 7, 15 and 9. The three-angled sides 7 and 15 are sloped, but the side 9 is flat and upright. The side 15 serves as a top portion. This aerodynamic arrangement 6 is as effective as those of the foregoing embodiments.

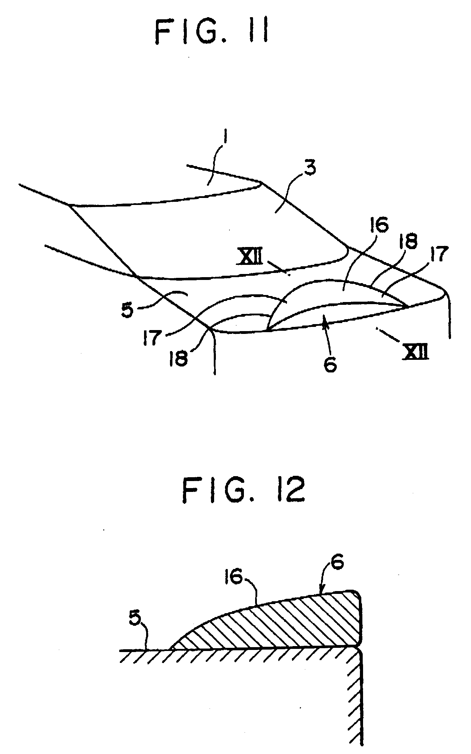

An aerodynamic arrangement 6 of a seventh embodiment is in the shape of crescent as shown in Fig. 11, and is disposed on the trunk lid 5. The aerodynamic arrangement 6 becomes taller toward the center thereof and wider toward the rear edge thereof, and has a cross section as shown in Fig. 12, and is also as effective as those of the foregoing embodiments.

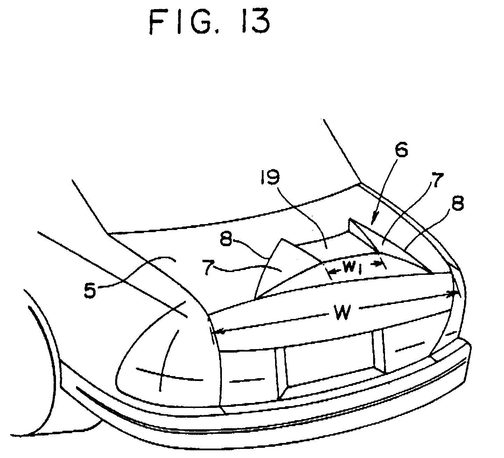

According to an eighth embodiment of the invention, an aerodynamic arrangement 6 is substantially in the shape of truncated crescent as shown in Fig. 13. The aerodynamic arrangement 6 has a caved quadlateral top portion 19 between a pair of three-angled sloping sides 7. The caved quadlateral top portion 19 becomes narrower and shallower toward the rear edge thereof so as to extensively urge the airstream A upward. This aerodynamic arrangement 6 is as effective as those of the foregoing embodiments.

A width W₁ of the quadlateral top portion 19 is preferably equal to or less than a quarter (1/4) of the width W of the trunk lid 5.

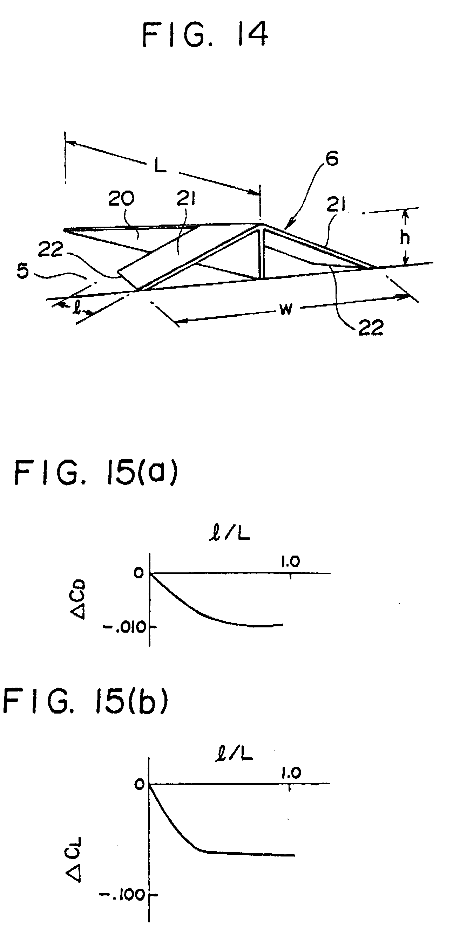

Fig. 14 shows an aerodynamic arrangement 6 according to a ninth embodiment. The aerodynamic arrangement 6 is in the shape of gable roof, and comprises a triangular upright member 20 and a pair of quadlateral members 21 sloping downward from the upright member 20. The triangular upright member 20 becomes higher toward the rear edge thereof, and the quadlateral downward-sloping members 21 also become wider at bottom edges 22 thereof toward the rear edge of the trunk lid 5.

In Figs. 15(a) and 15(b), an example of the variation DDCD and an example of the variation DDCL are shown when the sizes of the aerodynamic arrangement 6 of Fig. 14 are changed. In these figures, letter w denotes the whole width of the aerodynamic arrangement 6, h the height of the aerodynamic arrangement 6, l the width of each of the quadlateral downward-sloping side 21, and L the whole length of the aerodynamic arrangement 6. It is assumed that w/W is approximately 0.5 and h/H is approximately 0.3. However, l/L is variable. When l/L is larger than 0.4, the air drag as well as the lift applied to the rear part of the vehicle can be as effectively decreased as done by the aerodynamic arrangements of the foregoing embodiments.

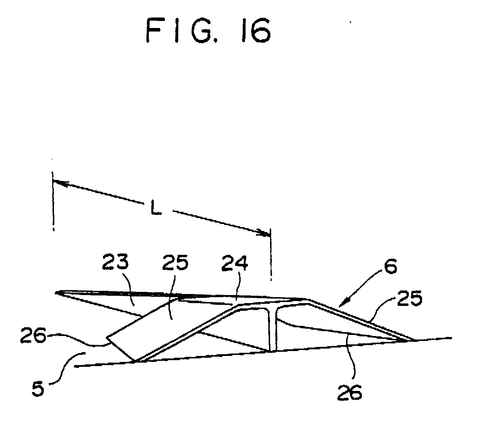

An aerodynamic arrangement 6 shown in Fig. 16 is a modification of the aerodynamic arrangement 6 of the ninth embodiment. In this tenth embodiment, a pair of quadlateral downward-sloping members 25 form a flat top portion 24 near the rear edge of a triangular upright member 23. The flat top portion 24 as well as the quadlateral downward-sloping members 25 become wider toward the rear edges thereof.

It is preferable that a width of the flat top portion 24 is equal to or less than one third (1/3) of the total width of the aerodynamic arrangement 6, and that a length L of the aerodynamic arrangement 6 is equal to or more than one third (1/3) of the whole depth of the trunk lid 5. This aerodynamic arrangement 6 is also as effective as those of the foregoing embodiments.

As described so far, each of the aerodynamic arrangements is an independent member and secured on the rear part of the trunk lid. Alternatively, each aerodynamic arrangement may be formed as an integral part of the trunk lid. Further, the shape or design of the foregoing aerodynamic arrangements can be modified in many ways so as to make them more effective in operation and more attractive in the appearance. For instance, the flat sloping sides may be changed to partially or fully concave or convex sides. The concave or convex sloping sides may be changed to partially or fully flat sloping sides. Further, the top portions may be partially or fully concave or convex.

Furthermore, it is possible for the aerodynamic arrangement to incorporate a member such as a stop lamp, a turn indicator, a sensor or a camera for checking the rear part of the vehicle, a radio, telephone or television antenna, and a position sensor. The aerodynamic arrangement is also very advantageous in this respect.

According to the present invention, the biasing means of the aerodynamic arrangement effectively diverts the airstreams whirling along the opposite side edges of the vehicle toward the trunk lid, so that the airstream flowing straight onto the trunk lid can be weakened, which reduces the air drag as well as the lift on the rear part of the running vehicle. These advantages of the aerodynamic arrangement increase the operational stability of the vehicle and contribute to the reduction of the fuel consumption.

## Claims

1. An aerodynamic arrangement for a vehicle having a sloping portion extending downward from a rear edge of a roof panel and a shelf-like deck member extending rearward from the sloping portion, said aerodynamic arrangement comprising biasing means positioned on the deck member so as to divert airstreams flowing over the deck member toward the rear part thereof.

2. An aerodynamic arrangement as in claim 1, wherein said biasing moans is formed as an integral part of the deck member.

3. An aerodynamic arrangement as in claim 1, wherein said biasing means is attached on the deck member.

4. An aerodynamic arrangement as in claim 1, wherein said biasing means includes at least one sloping side for diverting airstreams flowing over the deck member toward the rear part thereof.

5. An aerodynamic arrangement as in claim 1, wherein said biasing means includes a pair of sloping parts for diverting in opposite directions airstreams flowing over the deck member toward rear part thereof.

6. An aerodynamic arrangement as in claim 4, wherein said at least one sloping side also urges upward airstreams flowing over the deck member toward the rear part thereof.

7. An aerodynamic arrangement as in claim 4, wherein said at least one sloping side has a curved surface.

8. An aerodynamic arrangement as in claim 4, wherein said at least one sloping side is partially or totally convex or concave.

9. An aerodynamic arrangement as in claim 4, wherein said biasing means includes a top portion for urging airstreams upward.

10. An aerodynamic arrangement as in claim 5, wherein said biasing means includes a top portion between said pair of sloping parts so as to urge airstreams upward.

11. An aerodynamic arrangement as in claim 9, wherein said sloping side has a curved surface.

12. An aerodynamic arrangement as in claim 10, wherein said sloping parts are partially or totally convex or concave.

13. An aerodynamic arrangement as in claim 6 or 10, wherein said biasing means fans out toward a rear edge thereof.

14. An aerodynamic arrangement as in claim 1, wherein the deck member is a trunk lid of the vehicle.

15. An aerodynamic arrangement as in claim 1, wherein the sloping member is a tail gate which can be opened and closed and has an extending rear edge serving as the deck member.

16. An aerodynamic arrangement as in claim 1, wherein a prolongation of the roof panel and the sloping member form an angle of equal to or more than 20 degrees.

17. An aerodynamic arrangement as in claim 1, wherein an angle formed by a prolongation of the roof panel and a line connecting the rear edge of the roof panel and the rear edge of the deck member is between 10 degrees and 70 degrees.

18. An aerodynamic arrangement as in claim 6, wherein an angle formed by a prolongation of the roof panel and a line connecting the rear edge of the roof panel and the vertex of the aerodynamic arrangement is between 10 degrees and 45 degrees.

19. An aerodynamic arrangement as in claim 6, wherein h/H is 0.15 - 0.40 where h denotes a height between the vertex of the sloping side and the rear edge of the deck member, and H denotes a height H between the rear edge of the roof panel and the rear edge of the deck member.

20. An aerodynamic arrangement as in claim 4, wherein w/W is 0.30 - 0.60 where w denotes a width of the sloping side and W denotes a width of the deck-shaped member.

21. An aerodynamic arrangement for a vehicle having a rear window extending downward from a roof panel and a shelf-like deck member extending rearward from the rear window, the aerodynamic arrangement comprising a sloping member which is tall at a center part thereof, and fans out and increases a height thereof toward a rear edge thereof.

22. An aerodynamic arrangement for a vehicle having a rear window extending downward from a roof panel and a shelf-like deck member extending rearward from the rear window, the aerodynamic arrangement comprising an upright member which is positioned substantially at the center of the deck member and increases a height thereof toward the rear part of the deck member, and a pair of quadlateral members which extend and slope downward from the upright member, and become wider toward the rear part of the deck member.

23. An aerodynamic arrangement for a vehicle having a rear window extending downward from a roof panel and a shelf-like deck member extending rearward from the rear window, the aerodynamic arrangement comprising a top member which is positioned substantially at the center of the deck member and increases a height thereof toward the rear part of the deck member, and a pair of quadlateral members which extend and slope downward from the top member, and become wider toward the rear part of the deck member.

24. An aerodynamic arrangement as in claim 20 or 21, wherein l/L is equal to or larger than 0.40 where l denotes a depth of each sloping member and L denotes a depth of the top portion.

## Patentansprüche

1. Aerodynamische Anordnung für ein Fahrzeug, das einen schräg abfallenden Abschnitt aufweist, der sich von einem hinteren Rand eines Dachtafelteils aus nach unten erstreckt, und ein plattenartiges Deckteil, das sich vom schräg abfallenden Abschnitt aus nach hinten erstreckt, wobei die aerodynamische Anordnung eine auf dem Deckteil angeordnete Beeinflussungseinrichtung umfaßt, um Luftströmungen abzulenken, die über das Deckteil in Richtung des hinteren Teils desselben strömen.

2. Aerodynamische Anordnung nach Anspruch 1, wobei die Beeinflussungseinrichtung als integraler Teil des Deckteils ausgebildet ist.

3. Aerodynamische Anordnung nach Anspruch 1, wobei die Beeinflussungseinrichtung auf dem Deckteil befestigt ist.

4. Aerodynamische Anordnung nach Anspruch 1, wobei die Beeinflussungseinrichtung wenigstens eine schräge Seite aufweist, um Luftströmungen abzulenken, die über das Deckteil in Richtung seines hinteren Teils strömen.

5. Aerodynamische Anordnung nach Anspruch 1, wobei die Beeinflussungseinrichtung ein Paar schräge Teile aufweist, um Luftströmungen, die über das Deckteil in Richtung seines hinteren Teils strömen, in entgegengesetzte Richtungen abzulenken.

6. Aerodynamische Anordnung nach Anspruch 4, wobei die wenigstens eine schräge Seite auch nach oben gerichtete Luftströmungen beaufschlagt, die über das Deckteil in Richtung seines hinteren Teils strömen.

7. Aerodynamische Anordnung nach Anspruch 4, wobei die wenigstens eine schräge Seite eine gekrümmte Oberfläche hat.

8. Aerodynamische Anordnung nach Anspruch 4, wobei die wenigstens eine schräge Seite teilweise oder vollständig konvex oder konkav ist.

9. Aerodynamische Anordnung nach Anspruch 4, wobei die Beeinflussungseinrichtung einen oberen Abschnitt aufweist, um Luftströmungen nach oben zu drängen.

10. Aerodynamische Anordnung nach Anspruch 5, wobei die Beeinflussungseinrichtung einen oberen Abschnitt zwischen dem Paar schrägen Teilen aufweist, um Luftströmungen nach oben zu drängen.

11. Aerodynamische Anordnung nach Anspruch 9, wobei die schräge Seite eine gekrümmte Oberfläche hat.

12. Aerodynamische Anordnung nach Anspruch 10, wobei die schrägen Teile teilweise oder vollständig konvex oder konkav sind.

13. Aerodynamische Anordnung nach Anspruch 6 oder 10, wobei sich die Beeinflussungseinrichtung in Richtung eines hinteren Randes derselben verzweigt.

14. Aerodynamische Anordnung nach Anspruch 1, wobei das Deckteil ein Kofferraumdeckel des Fahrzeugs ist.

15. Aerodynamische Anordnung nach Anspruch 1, wobei das schräge Teil eine Heckklappe ist, die geöffnet und geschlossen werden kann und einen vorspringenden hinteren Rand hat, der als Deckteil dient.

16. Aerodynamische Anordnung nach Anspruch 1, wobei eine Verlängerung des Dachtafelteils und das schräg abfallende Teil einen Winkel von gleich oder größer als 20° bilden.

17. Aerodynamische Anordnung nach Anspruch 1, wobei ein Winkel, der von einer Verlängerung des Dachtafelteils und einer Linie gebildet wird, die den hinteren Rand des Dachtafelteils und den hinteren Rand des Deckteils verbindet, zwischen 10° und 70° ist.

18. Aerodynamische Anordnung nach Anspruch 6, wobei ein Winkel, der von einer Verlängerung des Dachtafelteils und einer Linie gebildet wird, die den hinteren Rand des Dachtafelteils und den Scheitel der aerodynamischen Anordnung verbindet, zwischen 10° und 45° ist.

19. Aerodynamische Anordnung nach Anspruch 6, wobei h/H 0,15 - 0,40 ist, wobei h eine Höhe zwischen dem Scheitel der schrägen Seite und dem hinteren Rand des Deckteils bezeichnet, und H eine Höhe H zwischen dem hinteren Rand des Dachtafelteils und dem hinteren Rand des Deckteils bezeichnet.

20. Aerodynamische Anordnung nach Anspruch 4, wobei w/W 0,30 - 0,60 ist, wobei w eine Breite der schrägen Seite und W eine Breite des deckförmigen Teils bezeichnen.

21. Aerodynamische Anordnung für ein Fahrzeug, das ein hinteres Fenster aufweist, das sich von einem Dachtafelteil aus nach unten erstreckt, und ein plattenartiges Deckteil, das sich vom hinteren Fenster aus nach hinten erstreckt, wobei die aerodynamische Anordnung ein schräg abfallendes Teil umfaßt, das in seinem Mittelteil hoch ist, sich verzweigt und in Richtung seines hinteren Randes an Höhe zunimmt.

22. Aerodynamische Anordnung für ein Fahrzeug, das ein hinteres Fenster aufweist, das sich von einem Dachtafelteil aus nach unten erstreckt, und ein plattenartiges Deckteil, das sich vom hinteren Fenster aus nach hinten erstreckt, wobei die aerodynamische Anordnung ein aufrecht stehendes Teil umfaßt, das im wesentlichen in der Mitte des Deckteils angeordnet ist und dessen Höhe in Richtung des hinteren Teils des Deckteils vergrößert, sowie ein Paar vierseitige Teile, die sich vom aufrecht stehenden Teil aus erstrecken und schräg nach unten verlaufen und in Richtung des hinteren Teils des Deckteils breiter werden.

23. Aerodynamische Anordnung für ein Fahrzeug, das ein hinteres Fenster aufweist, das sich von einem Dachtafelteil aus nach unten erstreckt, und ein plattenartiges Deckteil, das sich vom hinteren Fenster aus nach hinten erstreckt, wobei die aerodynamische Anordnung ein oberes Teil umfaßt, das im wesentlichen in der Mitte des Deckteils angeordnet ist und eine Höhe desselben in Richtung des hinteren Teils des Deckteils vergrößert, und ein Paar vierseitige Teile, die sich vom oberen Teil aus erstrecken und schräg nach unten verlaufen und in Richtung des hinteren Teils des Deckteils breiter werden.

24. Aerodynamische Anordnung nach Anspruch 20 oder 21, wobei l/L gleich oder größer als 0,40 ist, wobei l eine Tiefe eines jeden schrägen Teils und L eine Tiefe des oberen Abschnittes bezeichnen.

## Revendications

1. Agencement aérodynamique pour un véhicule qui comporte une partie en pente s'étendant vers le bas depuis une bordure arrière d'un panneau de toiture et un élément de couverture en forme de panneau qui s'étend vers l'arrière depuis la partie en pente, ledit agencement aérodynamique comprenant des moyens de sollicitation placés sur l'élément de couverture de façon à faire diverger les courants d'air qui s'écoulent au-dessus de l'élément de couverture vers la partie arrière de celui-ci.

2. Agencement aérodynamique selon la revendication 1, dans lequel lesdits moyens de sollicitation sont formés comme partie intégrante de l'élément de couverture.

3. Agencement aérodynamique selon la revendication 1, dans lequel lesdits moyens de sollicitation sont attachés sur l'élément de couverture.

4. Agencement aérodynamique selon la revendication 1, dans lequel lesdits moyens de sollicitation comprennent au moins un côté en pente pour faire diverger les courants d'air qui s'écoulent au-dessus de l'élément de couverture vers la partie arrière de celui-ci.

5. Agencement aérodynamique selon la revendication 1, dans lequel lesdits moyens de sollicitation incluent une paire de parties en pente pour faire diverger dans des directions opposées les courants d'air qui s'écoulent au-dessus de l'élément de couverture vers la partie arrière de celui-ci.

6. Agencement aérodynamique selon la revendication 4, dans lequel ledit au moins un côté en pente repousse également les courants d'air montants qui s'écoulent au-dessus de l'élément de couverture vers la partie arrière de celui-ci.

7. Agencement aérodynamique selon la revendication 4, dans lequel ledit au moins un côté en pente présente une surface incurvée.

8. Agencement aérodynamique selon la revendication 4, dans lequel ledit au moins un côté en pente est partiellement ou totalement convexe ou concave.

9. Agencement aérodynamique selon la revendication 4, dans lequel lesdits moyens de sollicitation incluent une partie de sommet pour repousser les courants d'air vers le haut.

10. Agencement aérodynamique selon la revendication 5, dans lequel lesdits moyens de sollicitation comprennent une partie de sommet entre ladite paire de parties en pente de manière à repousser les courants d'air vers le haut.

11. Agencement aérodynamique selon la revendication 9, dans lequel ledit côté en pente présente une surface incurvée.

12. Agencement aérodynamique selon la revendication 10, dans lequel lesdites parties en pente sont partiellement ou totalement convexes ou concaves.

13. Agencement aérodynamique selon l'une ou l'autre des revendications 6 et 10, dans lequel lesdits moyens de sollicitation divergent vers l'extérieur en direction de leur bordure arrière.

14. Agencement aérodynamique selon la revendication 1, dans lequel l'élément de couverture est un couvercle de coffre du véhicule.

15. Agencement aérodynamique selon la revendication 1, dans lequel l'élément en pente est une porte de hayon qui peut être ouverte ou fermée et qui présente un bord arrière en extension servant d'élément de couverture.

16. Agencement aérodynamique selon la revendication 1, dans lequel une prolongation du panneau de toiture et l'élément en pente forment un angle égal ou supérieur à 20°.

17. Agencement aérodynamique selon la revendication 1, dans lequel un angle formé par une prolongation du panneau de toiture et une ligne connectant le bord arrière du panneau de toiture et le bord arrière de l'élément de couverture est compris entre 10° et 70°.

18. Agencement aérodynamique selon la revendication 6, dans lequel un angle formé par une prolongation du panneau de toiture et une ligne connectant le bord arrière du panneau de toiture et le sommet de l'agencement aérodynamique est compris entre 10° et 45°.

19. Agencement aérodynamique selon la revendication 6, dans lequel h/H est compris entre 0,15 et 0,40, avec h désignant la hauteur entre le sommet du côté en pente et le bord arrière de l'élément de couverture, et H désignant une hauteur entre le bord arrière du panneau de toiture et le bord arrière de l'élément de couverture.

20. Agencement aérodynamique selon la revendication 4, dans lequel w/W est compris entre 0,30 et 0,60, avec w désignant une largeur du côté en pente et W désignant une largeur de l'élément de couverture.

21. Agencement aérodynamique pour un véhicule comportant une fenêtre arrière qui s'étend vers le bas depuis un panneau de toiture et un élément de couverture en forme de panneau qui s'étend vers l'arrière depuis la fenêtre arrière, l'agencement aérodynamique comprenant un élément en pente qui est élevé au niveau de sa partie centrale, qui va en divergeant et dont la hauteur augmente en direction d'un bord arrière de celui-ci.

22. Agencement aérodynamique pour un véhicule comportant une fenêtre arrière qui s'étend vers le bas depuis un panneau de toiture et un élément de couverture en forme de panneau qui s'étend vers l'arrière depuis la fenêtre arrière, l'agencement aérodynamique comprenant un élément vertical placé sensiblement au centre de l'élément de couverture, dont la hauteur augmente en direction de la partie arrière de l'élément de couverture, et une paire d'éléments en quadrilatère qui s'étendent en pente vers le bas depuis l'élément vertical, et qui deviennent plus larges en direction de la partie arrière de l'élément de couverture.

23. Agencement aérodynamique pour un véhicule comportant une fenêtre arrière qui s'étend vers le bas depuis un panneau de toiture et un élément de couverture en forme de panneau qui s'étend vers l'arrière depuis la fenêtre arrière, l'agencement aérodynamique comprenant un élément de sommet qui est placé sensiblement au centre de l'élément de couverture, dont la hauteur augmente en direction de la partie arrière de l'élément de couverture, et une paire d'éléments en quadrilatère qui s'étendent en pente vers le bas depuis l'élément de sommet, et qui deviennent plus larges en direction de la partie arrière de l'élément de couverture.

24. Agencement aérodynamique selon l'une ou l'autre des revendications 20 et 21, dans lequel ℓ/L est égal ou supérieur à 0,40, ℓ désignant une profondeur de chaque élément en pente et L désignant une profondeur de la partie de sommet.
